# EUROPÄISCHE PATENTSCHRIFT

(11) **EP 2 610 821 B1**
(45) Veröffentlichungstag und Bekanntmachung des Hinweises auf die Patenterteilung: **23.07.2014**
(21) Anmeldenummer: 13001577.9
(22) Anmeldetag: 24.08.2009
(51) Int. Cl.: G07C 9/00, G06K 19/08, H04B 10/114

(54) **Verfahren zum Erkennen eines mit einem optischen Transponder versehenen Identifikationselementes**
Method for detecting an identification element having an optical transponder
Procédé de détection d'un élément d'identification pourvu d'un transpondeur optique

(30) Priorität: 01.09.2008 DE 102008045142; 13.10.2008 DE 102008050988
(43) Veröffentlichungstag der Anmeldung: 03.07.2013
(62) Teilanmeldung aus: 09778071.2
(73) Patentinhaber: Reime, Gerd, 77815 Bühl (DE)
(72) Erfinder: Reime, Gerd, 77815 Bühl (DE)
(74) Vertreter: Reinhardt, Harry

(56) Entgegenhaltungen:
- WO-A1-03/019502
- US-A1- 2006 256 070
- US-A1- 2007 035 381

## Beschreibung

Die Erfindung betrifft ein Verfahren zum Erkennen eines mit einem optischen Transponder versehenen Identifikationselements mit den Merkmalen des Anspruches 1.

### Stand der Technik

Induktiv arbeitende Transponder sind hinlänglich bekannt. Sie werden in vielen Fällen als Zugangskontrolle, z.B. an Sicherheitstüren, eingesetzt. Vor der Tür befindet sich ein sogenannter Kartenleser. Zum Betreten des gesicherten Raumes muss der Benutzer ein kleines berechtigendes Element, oft in Form einer Scheckkarte, nahe an den Kartenleser halten. Durch die unmittelbare Nähe kann induktiv Leistung in die Karte eingespeist werden. Die Karte selbst gibt daraufhin zur Identifizierung induktiv ein digitales Datenwort zurück an den Kartenleser. Dieser vergleicht das Datenwort mit seinen gespeicherten Daten und betätigt bei entsprechender Übereinstimmung das Türöffnungssystem. Bei ähnlichen Systemen kann durch den Kartenleser auch das aktuelle Datenwort auf der Karte verändert, z.B. modifiziert werden.

Aus der WO 03/019502 A1 ist ein Verfahren zur Erkennung eines optischen Transponders bekannt, in dem der optische Transponder erkannt und mit einer RFID-Nummer eines erkannten magnetischen optischen Transponders korreliert wird. Es wird nicht überprüft, ob der optische Transponder ohne Zuordnung ist.

Ein optisches Datenübertragungsgerät für eine Einrichtung mit einem Empfänger, der an einem Standort der Einrichtung angeordnet ist, sowie mit einer Vielzahl tragbarer Sender, welche von einer Vielzahl entsprechender Personen getragen werden, ist aus der EP 1 229 672 B1 bekannt. Dieses Datenübertragungsgerät besteht aus einem Bewegungsdetektor, welcher an dem Standort angeordnet ist, und einer Vielzahl optischer drahtloser Datenverbindungen zwischen dem Empfänger und einer Vielzahl von Sendern, wobei jeder Sender einen einmaligen Identifikationscode sowie Mittel für das Betätigen eines Alarms aufweist. Der Alarm wird ausgelöst, wenn eine Person am Standort durch den Bewegungsdetektor festgestellt wird, welche keinen Sender mit Identifikationscode aufweist, der anzeigt, dass der Person Zugang zu dem Standort gewährt werden darf.

Die EP 1 804 220 A1 zeigt ein Verfahren zur berechtigten Gewährung eines Dienstes und ein portables Gerät zu dessen Durchführung ohne optische Datenübertragung. Die Kommunikationsverbindung zwischen portablen Gerät und dem Medium ist für den Nahbereich vorgesehen. Das portable Gerät überträgt über mehrere verschiedene Kommunikationsverbindungen ein oder mehrere Kennzeichen, damit ein Zugang zu dem Dienst freigeschalten wird. Der Einsatz der Kommunikationsverbindung im Nahbereich ermöglicht dem Bediener kein Durchschreiten einer Tür, ohne seinen Bewegungsablauf zu unterbrechen. Der Bediener muss bei Nutzung des Dienstes sich mit dem portablen Gerät hin zum Medium bewegen.

Aus der DE 10 2005 062 632 A1 ist eine automatische Verwaltung für den Aufenthalt von Personen in Räumlichkeiten von Gebäuden bekannt, bei denen die Zugangsberechtigung auf einem Identifikationselement am Zugang des Gebäudes programmiert wird. Einzelne Zugangskontrolleinrichtungen überprüfen dann diese Information. Dies erfolgt vorzugsweise dadurch, dass die Identifikationselemente optisch, akustisch, magnetisch und/oder elektronisch erfassbare, individualisierbare Kennungen erhalten. Ein Transponder wird vor allem dann eingesetzt, wenn es um eine elektronisch erfassbare Kennung geht, bei der von einer stationären Sende-/Empfangseinrichtung ein Signal ausgesendet wird, welches den Transponder bzw. die entsprechende Sende-/Empfangseinrichtung des Identifikationselementes dazu anhält, ein die individualisierte Kennung umfassendes Signal auszusenden. Dieses Signal wird dann seitens der stationären Einrichtung zur Steuerung des Zugangs erfasst. Wird mit optischen Mitteln gearbeitet, so wird lediglich eine Kennung auf das Identifikationselement aufgedruckt, die dann vor Ort vom Identifikationselement gelesen wird.

Ausgehend von diesem Stand der Technik ist Aufgabe der Erfindung, undefinierte Transponderzuweisungen des Identifikationselements zu vermeiden.

Diese Aufgabe wird durch ein Verfahren mit den Merkmalen des Anspruches 1 gelöst.

Dazu wird überprüft, ob der optischer Transponder ohne Zuordnung ist, und falls nicht wird diesem die RFID des magnetischen Transponders zugewiesen. Damit wird ein anfangs nicht zugewiesener Transponder spätestens zum Zeitpunkt der ersten Identifikation zugewiesen.

Vorzugsweise weist das batterielose Identifikationselement eine integrierte autarke Energieversorgung auf. Der optische Transponder kann nur eine Sendeeinheit oder bei z.B. erhöhten Sicherheitsanforderungen sowohl eine Sendeeinheit als auch eine Empfangseinheit aufweisen. Die Daten des optischen Transponders sind durch eine bidirektionale Kommunikation mit einer Einrichtung zur Erfassung und/oder Steuerung der Zugangsberechtigung beeinflussbar, so dass auch eine einmal erkannte Zuordnung wieder geändert werden kann.

Weitere Vorteile ergeben sich aus den Unteransprüchen und der nachfolgenden Beschreibung bevorzugter Ausführungsbeispiele.

Im Folgenden wird die Erfindung an in den beigefügten Figuren dargestellten Ausführungsbeispielen näher erläutert. Es zeigen:
- Fig. 1: ein Namensschild mit optischem Transponder,
- Fig. 2: das zugehörige Blockschaltbild des optischen Transponders mit einer optischen Programmierfunktion,
- Fig. 3: die Ladeschaltung mit Vorzugsberechtigung,
- Fig. 4: den zeitlichen Ablauf der Funktionen in der stationären Sicherheitseinrichtung,
- Fig. 5: die zeitlichen Funktionen im optischen Transponder,
- Fig. 6: den Leistungsverbrauch PWR (Power) einer Empfangs- bzw. einer Sendeeinheit bei einer Pulsbreite von einigen Millisekunden (ms) bis zu einigen Nanosekunden (ns),
- Fig. 7: die Funktion der stationären Sicherheitseinrichtung,
- Fig. 8: die Funktion des optischen Transponders,
- Fig. 9: die Empfangs- und Sendeeinheit der stationären Sicherheitseinrichtung,
- Fig. 10: eine schematische Ansicht eines Kartenlesers mit vorgeschaltetem Konvertierungsmodul.

### Ausführliche Beschreibung bevorzugter Ausführungsbeispiele

Die Erfindung wird jetzt beispielhaft unter bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen.

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

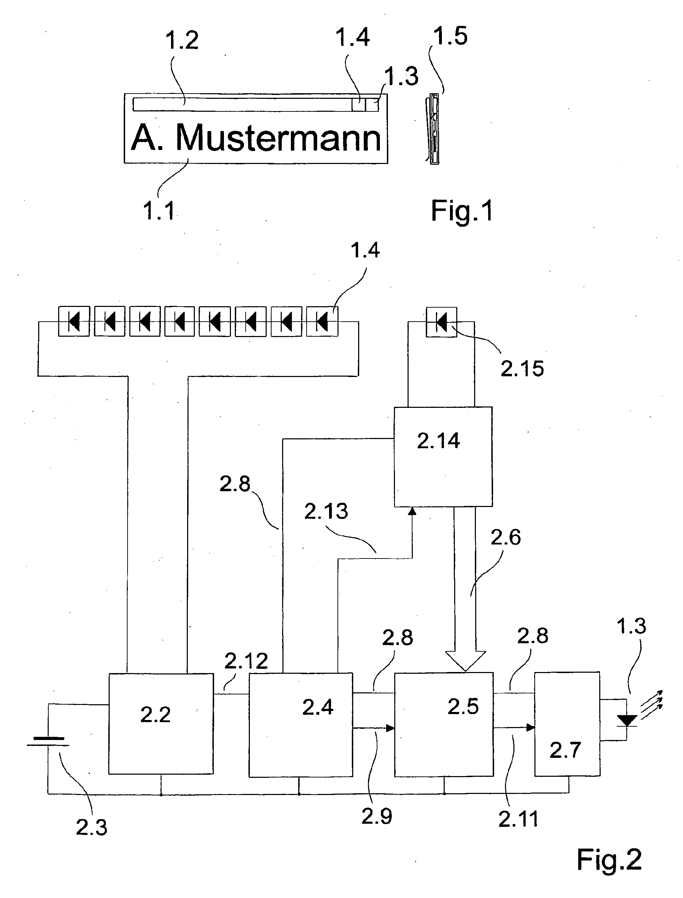

Die Figuren und insbesondere Fig. 1 zeigen ein Identifikationselement, das vorzugsweise die Form eines Namensschilds oder eines einem Objekt oder Körper zugeordneten oder an diesem zu tragenden Kennzeichnungs- oder Identifikationselements vorzugsweise vergleichbarer Größe hat, d.h. das Identifikationselement ist regelmäßig verhältnismäßig klein. Es kann z.B. ähnlich wie bei einem Garagentoröffner auch an einem Fahrzeug angeordnet sein und identifiziert dann das Fahrzeug oder die darin befindliche Person hinsichtlich ihrer Zugangsberechtigung, ohne dass eine manuelle Auslösung erforderlich ist. Es weist einen optischen Transponder 1.1 mit einer Daten aussendenden Sendeeinheit 1.3 und ggf. mit einer Daten empfangenen Empfangseinheit, zur Kommunikation mit einer Einrichtung zur Erfassung und/oder Steuerung einer Zugangsberechtigung zu Räumen oder Objekten auf. Sendeeinheit und die ggf. vorhandene Empfangseinheit des optischen Transponders arbeiten auf optischem Wege, d.h. die Sendeeinheit sendet Daten als Lichtsignal aus und die Empfangseinheit empfängt Licht als Signale bzw. Daten. Besitzt der optische Transponder nur eine Sendeeinheit, kann alternativ auch eine Empfangseinheit vorgesehen sein, die Funkwellen von ihrem Gegenüber empfängt. Dabei sind der optische Transponder und eine autarke Energieversorgung im Identifikationselement integriert.

Der im Identifikationselement integrierte optische Transponder kann also nur eine Sendeeinheit 1.3 oder bei z.B. erhöhten Sicherheitsanforderungen sowohl eine Sendeeinheit als auch eine Empfangseinheit 1.4 aufweisen. In beiden Fällen sendet die Sendeeinheit kontinuierlich zumindest zeitabschnittsweise, z.B. mit einer bestimmten Frequenz oder in einem bestimmten Takt optische Signale selbsttätig aus, d.h. eine manuelle Betätigung wie z.B. bei einer Fernbedienung erfolgt nicht. Dennoch und gerade trotz der dauernden Aussendung der optischen Signale ist eine Integration in ein verhältnismäßig kleines Identifikationselement wie ein Namensschild möglich.

Das folgende Ausführungsbeispiel und insbesondere der Bezug auf die Fig. 1 bis 3 ist nicht Teil der Erfindung. Es handelt sich dabei jedoch um Angaben, die das Verständnis der Erfindung erleichtern. Fig. 1 zeigt ein Namensschild mit optischem Transponder. Im Bereich 1.2 ist die Solarzelle untergebracht, die als autarke Energieversorgung dient. Im Ausführungsbeispiel besteht sie aus einer Anordnung von acht Photodioden, z.B. BPW 34 der Fa. Osram. Alternativ kann die autarke Energieversorgung auch durch wenigstens eine in das Identifikationselement, also z.B. in das Gehäuse 1.1 des Namensschilds integrierte Batterie gebildet sein, die einen Betrieb von mehr als einem Jahr gewährleistet. In 1.3 befindet sich das optische Sendeelement, z.B. eine (IR-) Leuchtdiode. 1.4 ist die Photodiode zum Empfang der von der stationären Sicherheitseinrichtung ausgesandten Information. Das Gehäuse 1.1 kann aus beliebigem Material bestehen und dient nur zur Aufnahme der Elektronik. 1.5 zeigt die schematische Seitenansicht (Schnitt) mit der üblichen Klammer zum Befestigen an der Kleidung. Im Innenraum ist die nur 1.5 mm dicke Elektronik untergebracht. Wie zu erkennen ist, muss das Namensschild nicht dicker oder größer sein als ein übliches Namensschild ohne irgendwelche Elektronik.

Fig. 2 zeigt das zugehörige Blockschaltbild eines optischen Transponders im Ausführungsbeispiel mit einer optischen Programmierfunktion. Die Anordnung der acht Photodioden der Solarzelle 2.1 liefert bei mäßiger Beleuchtung eine Spannung von ca. 8 x 0,4 V, also 3.2 Volt bei einem Strom von wenigstens 100 µA. Die Spannungsversorgung des Transponders beträgt 2 - 3 V.

In der Ladeschaltung 2.2 wird die von der Solarzelle 2.1 gelieferte Spannung bevorrechtigt dem Taktgenerator 2.4 zugeführt. Die Vorzugsbevorrechtigung bedeutet, das bei leerem Akku 2.3 nicht erst durch lange Ladung die erforderliche Spannung von z.B. mindestens 2.0 V erreicht werden muss, sondern dass auch bei vollständig entleertem Akku erst der Taktgenerator 2.4 mit den daran angeschlossenen weiteren Elektronikstufen 2.5, 2.7 und 2.14 mit der nötigen Spannung versorgt wird. Der dabei nicht verbrauchte, also überschüssige Strom wird dann dem Akku 2.3 zugeleitet. Bei fehlender Beleuchtung der Solarzelle 2.1 und zumindest zum Teil geladenem Akku übernimmt dann dieser die Stromversorgung für 2.4, 2.5, 2.7 und 2.14. Die Stufe 2.5 ist die Datenwortgenerierungsstufe und enthält eine Steuerschaltung für die Sendeeinheit (optisches Sendeelement 1.3) und die Empfangseinheit (Photodiode 1.4) sowie ggf. einen Mikroprozessor, vorzugsweise einen FPGA (Field Programmable Gate Array). Hier können auch eine Speichereinheit und eine Programmiereinrichtung vorgesehen sein.

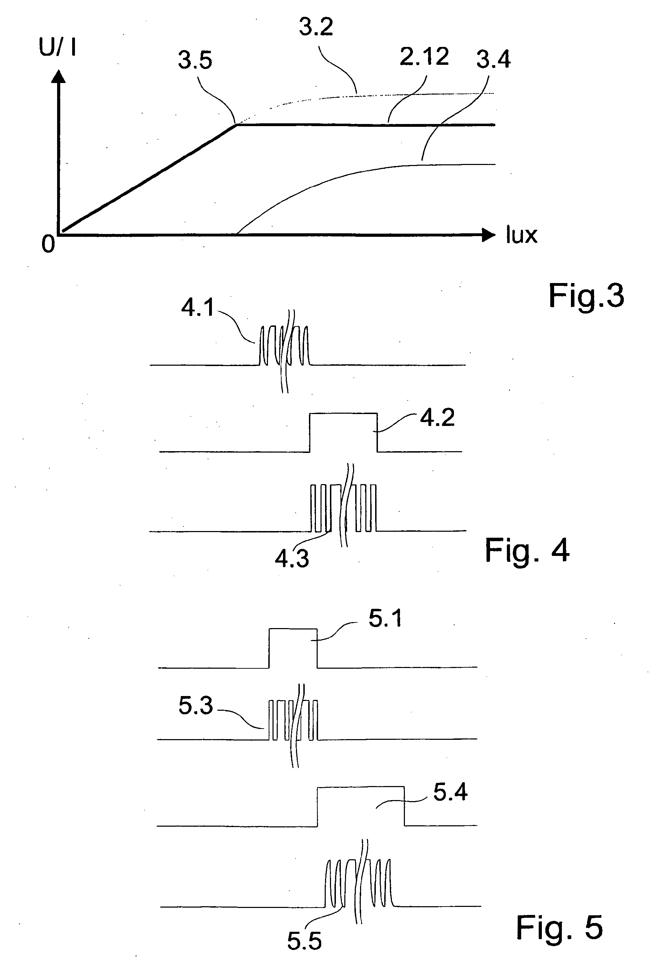

Fig. 3 erläutert die Ladeschaltung mit Vorzugsberechtigung 2.2.
Die Kurve 3.2 startet im gemeinsamen Nullpunkt von Spannungsversorgung 2.12 und der Kurve 3.2 selbst. Sie zeigt den Spannungsverlauf an der Solarzelle 2.1 bei ansteigender Beleuchtung ohne Belastung der Solarzelle. Bei ansteigender Beleuchtung steigt die Spannung so lange an, bis der Aktivierungspunkt 3.5 für den Ladestrom des Akkus 2.3 erreicht wird. Dies ist die nötige Spannungsversorgung 2.12 für den Taktgenerator 2.4, bzw. der Betriebsspannung 2.8 für die weiteren Stufen des Transponders. Diese Spannung der Spannungsversorgung 2.12 wird ab dem Aktivierungspunkt konstant gehalten und der Transponderelektronik als Spannung zugeführt. Der weitere theoretische Spannungsanstieg 3.2 wird in einen Ladestrom 3.4 für den Akku 2.3 umgewandelt. Dadurch wird dem Akku bei schwacher Beleuchtung erst ein Ladestrom zugeführt, wenn die Transponderelektronik mit der notwendigen Betriebsspannung versorgt ist. Dies hat den Vorteil, dass das Namensschild nach längerer Lagerung in Dunkelheit auch bei schwacher Beleuchtung sofort einsatzbereit ist.

Bei entsprechender Beleuchtung oder geladenem Akku wird die Spannungsversorgung 2.12 für den Taktgenerator 2.4 aktiviert. Der Taktgenerator 2.4 beinhaltet vorzugsweise einen Quarzoszillator mit nachgeschaltetem Frequenzteiler. Die durch den Quarz gegebene Genauigkeit dient zur Aussendung der optischen Datenworte in immer exakt dem gleichen Abstand. Dies ist von Vorteil für den Empfang der optischen Daten in stark gestörter Umgebung oder bei bidirektionalem Betrieb mehrerer Transponder gleichzeitig. Die Erläuterung dazu erfolgt in der Beschreibung des Empfängers.

Über 2.9 aktiviert der Taktoszillator 2.4 den Start für die Übertragung des optischen Datenwortes. Zur Einsparung von Energie werden die weiteren Stufen Datenwortgenerierung 2.5 und LED-Treiberstufe 2.7 nur während der Aussendung des Datenwortes mit der Betriebsspannung 2.8 versorgt. Die Datenwortgenerierung 2.5 erzeugt das entsprechende Datenwort 2.11 und gibt es an die LED-Treiberstufe 2.7, die mit entsprechendem Strom die LED 1.3 treibt. Das Datenwort kann fest durch die Hardware vorgegeben oder auch programmierbar sein. Für einen bidirektionalen Datenaustausch wird nach Aussenden des Datenwortes 2.11 mit dem Taktgenerator 2.4 über 2.13 die Empfangseinheit 2.14 aktiviert. Diese Aktivierung wird einige µs vor der erwarteten optischen Datenübertragung gestartet, um Umladevorgänge in den beteiligten Kondensatoren abzuschließen. Die Länge der Aktivierung der Empfangsstufe 2.14 hängt von der gewünschten Datenübertragung ab, sollte jedoch im Sinne eines geringen Durchschnittsstromverbrauchs kurz gehalten werden. Ein entsprechend energiesparsamer Betrieb kann alternativ auch mit einer Empfangseinheit zum Empfang von Funkwellen erreicht werden.

Im Ausführungsbeispiel ist für den Empfang der optischen Daten eine eigene Photodiode 1.4 vorgesehen. Selbstverständlich können auch bei geeigneter Elektronik die Photodioden 2.1 für den Empfang eingesetzt werden.

Die empfangenen Daten 2.6 werden der Stufe 2.5 zugeführt und können dort z.B. das Datenwort 2.11 in entsprechender gewünschter Weise beeinflussen. Dazu kann in der Stufe 2.5 z.B. ein Mikroprozessor, vorzugsweise ein FPGA vorgesehen sein. Vorzugsweise kann über diesen Weg auch die Grundprogrammierung des optischen Transponders erfolgen. Mit anderen Worten können so die Daten insbesondere des optischen Transponders 1.1 durch eine bidirektionale Kommunikation mit der Einrichtung zur Erfassung und/oder Steuerung der Zugangsberechtigung beeinflusst werden. Nach Aussendung des Datenwortes schaltet sich in diesem Ausführungsbeispiel der optische Transponder bis zur nächsten Aktivierung durch den Taktoszillator 2.4 selbständig ab.

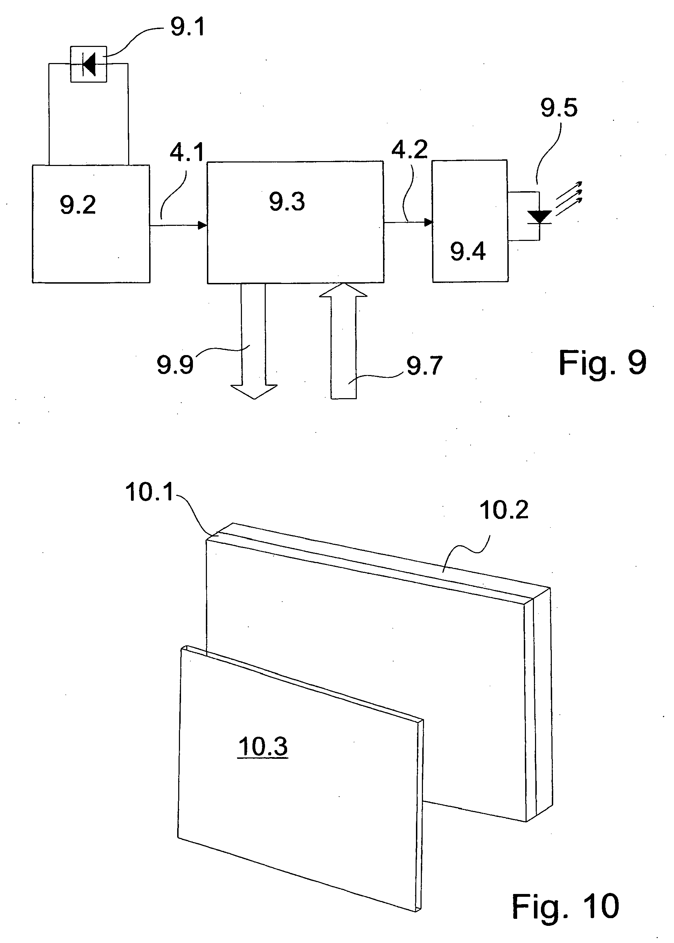

Die Empfangs- und Sendeeinheit der stationären Sicherheitseinrichtung ist in Fig. 9 dargestellt. Mit die Photodiode 9.1 und der Empfangselektronik 9.2 wird das vom Transponder ausgesandte optische Signal empfangen und der Datenverarbeitung 9.3 zugeleitet. Zur Störunterdrückung kann die Datenverarbeitung 9.3 nur Daten zulassen, die eine genau bestimmte Zeit nach der Erkennung eines gültigen Datenwortes auftreten. Dazu wird zunächst das von der Photodiode 9.1 und der Empfangselektronik 9.2 empfangene Signal ständig auf ein gültiges Datenwort überprüft. Ist dieses erst einmal aufgefunden, kann ein zweites Datenwort nur nach einem durch den Oszillator, vorzugsweise Quarzoszillator, im Transponder erzeugten Zeitraum wieder auftreten. Die Datenverarbeitung 9.3 verfügt über eine gleichwertige Zeitbasis und lässt dann nur die in dem entsprechenden Zeitraum auftretenden Daten zur Überprüfung zu.

Nach einem als gültig erkannten Datenwort in der stationären Sicherheitseinrichtung sendet die Sendestufe 9.4 der stationären Einheit mit dem aussendenden Element 9.5, z.B. einer Leuchtdiode ein eigenes Datenwort an den Transponder. Dieses Datenwort kann z.B. eine Programmierung des Transponders oder der Transponderdaten beinhalten. Vorteilhaft ist dieses Verfahren, wenn mehrere Personen z.B. gleichzeitig durch eine Sicherheitsschleuse gehen, und jeder Person individuelle Informationen optisch auf ihren Transponder "geschrieben" werden sollen. So ist es z.B. auch möglich die optischen Transponder mit zusätzlichen Informationen zu versehen, die zum Beispiel die abgelaufene Zugangsberechtigung einer dritten Person betreffen, die allen Zugangssicherungssystemen auch auf diesem Weg mitgeteilt werden kann und soll.

Fig. 4 zeigt den zeitlichen Ablauf der Funktionen in der stationären Sicherheitseinrichtung. Das vom Transponder optisch gesendete Signal ist nach dem Empfang in der Empfangselektronik 9.2 als empfangenes Signal 4.1 dargestellt. Nach Bestätigung der Gültigkeit in der Datenverarbeitung kann z.B. über die entsprechende Datenkommunikation 9.9 mit einer Steuerelektrik für eine Tür oder einem Zentralrechner der Durchgang freigegeben werden. Weiterhin kann nach einem gültigen Datenwort für den Zeitabschnitt 4.2 die Sendestufe 9.4 aktiviert werden. Sie sendet dann ein entsprechendes Datenwort 4.3, das z.B. über die Datenkommunikation 9.7 mit einem Zentralrechner vorgegeben wird.

Die zeitlichen Funktionen im optischen Transponder gemäß Fig. 2 zeigt Fig. 5. Über den Taktoszillator 2.4 wird die Stufe 2.5 zur Erzeugung des Datenwortes 5.3 im Zeitabschnitt 5.1 gestartet. Am Ende der Aussendung wird für den Zeitraum 5.4 die Transponder-Empfangseinheit 2.14 über 2.13 aktiviert. Das von der stationären Sicherheitseinrichtung nach Empfang eines gültigen Datenwortes ausgesandte eigene Datenwort ist als empfangenes Signal im Transponder als Kurvenform 5.5 dargestellt. Dieses empfangene Datenwort kann nun z.B. das originäre zu sendende Datenwort des Transponders entsprechend modifizieren.

Das vom Transponder ständig ausgesandte Datenwort kann auch nur ein "Aktivierungscode" für den stationären Empfänger sein, der dann wiederum ein spezielles Datenwort aussendet, das den optischen Transponder veranlasst, sein eigentliches Sicherheitsdatenwort auszusenden. Durch diese Maßnahme kann ein unbefugtes "Mithören", oder in diesem Fall optisches Ausspähen eines Datenwortes verhindert werden. Der "Aktivierungscode" für den Empfänger muss z.B. nicht besonders verschlüsselt sein, es reicht z.B. ein 8 Bit Code aus. Erst die eigentliche Identifizierung erfolgt dann mit einer wesentlich höheren Datenrate. Dadurch ist eine bidirektionale Kommunikation gewährleistet, die bei entsprechender Auslegung eine hohe Sicherheit bietet.

Die Größe des Identifikationselements kann durch den batterielosen Betrieb und diese Maßnahmen so reduziert werden, dass der Transponder zum Beispiel in Form eines üblichen Namensschildes hergestellt werden kann. Bei einem schnellen Zugehen einer Person auf eine Tür soll diese frühzeitig genug öffnen und den Bewegungsablauf der entsprechenden Person nicht behindern. Dazu ist eine entsprechend hohe Reichweite des optischen Transponders notwendig. Die Reichweite betrug im Ausführungsbeispiel mindestens 6 m. Das Datenwort des optischen Transponders soll auch optisch auf eine gewisse Entfernung, im Ausführungsbeispiel also 6 m, verändert werden können.

Bei nicht so hoher Anforderung an die Sicherheit oder aus anderen Gründen kann selbstverständlich auf die bidirektionale Funktion verzichtet werden. Dann sendet der Transponder sein Datenwort z.B. 10 mal in der Sekunde ohne weitere Funktionen aus. Bei sehr hohen Sicherheitsanforderungen kann zwischen der stationären Sicherheitseinrichtung und dem transportablen optischen Transponder auch ein über die hier beschriebenen Funktionen hinausgehender Datenaustausch stattfinden.

Sendeeinheiten für optische Signale im Infrarotbereich sind allgemein bekannt. Fernbedienungen, insbesondere die Fernbedienungen für TV und dergleichen arbeiten in der Regel mit codiertem Infrarotlicht. Diese Sendeeinheiten werden durch Tastendruck aktiviert und senden dann für die kurze Zeit des Tastendrucks oder für eine vorbestimmte Zeit codierte Lichtimpulse, also ihr Datenwort, aus. Zum Erreichen hoher Reichweiten wird für kurze Zeit ein entsprechend hoher Strom durch die Sendeelemente, meistens Leuchtdioden, geschickt. Die Pulslänge beträgt in der Regel einige zig µs, sodass ein relativ hoher Durchschnittsstrom während des Sendebetriebes erreicht wird. In der Praxis erreicht dieser Strom bei einer Versorgungsspannung von z.B. 3V während der Datenübertragung einige zig- bis mehrere hundert Milliampere. Daher sind diese Geräte mit einer "kräftigen" Batterie versehen und nur für sporadischen Betrieb geeignet. Ein Dauerbetrieb würde die Batterie in kurzer Zeit entleeren.

Eine weitere Anforderung ist die Reaktionsgeschwindigkeit. Ein schnelles Zugehen auf eine Tür muss entsprechend schnell erkannt werden, um rechtzeitig die Zugangsberechtigung zu prüfen und die Tür zu öffnen. Dies lässt sich nur gewährleisten, wenn die Wiederholrate des optischen Datenwortes entsprechend hoch ist, z.B. 10 mal in der Sekunde. Nach einem gegenseitigen Erkennen der stationären Sicherheitseinrichtung und des transportablen Transponders kann dann bei Bedarf der weitere Datenaustausch wesentlich öfter erfolgen.

Diese Anforderungen stellen jedoch eine große Hürde dar, insbesondere wenn es sich um ein optisches System handelt, das aus der Ferne auch noch optisch programmierbar sein soll.

### Lösungsmöglichkeit 1:

Der optische Transponder ist ständig in Empfangsbereitschaft. Er sendet nur dann sein Datenwort aus, wenn er ein speziell codiertes optisches Signal empfängt, das von der stationären Sicherheitseinrichtung, z.B. einer Tür ausgesandt wurde.

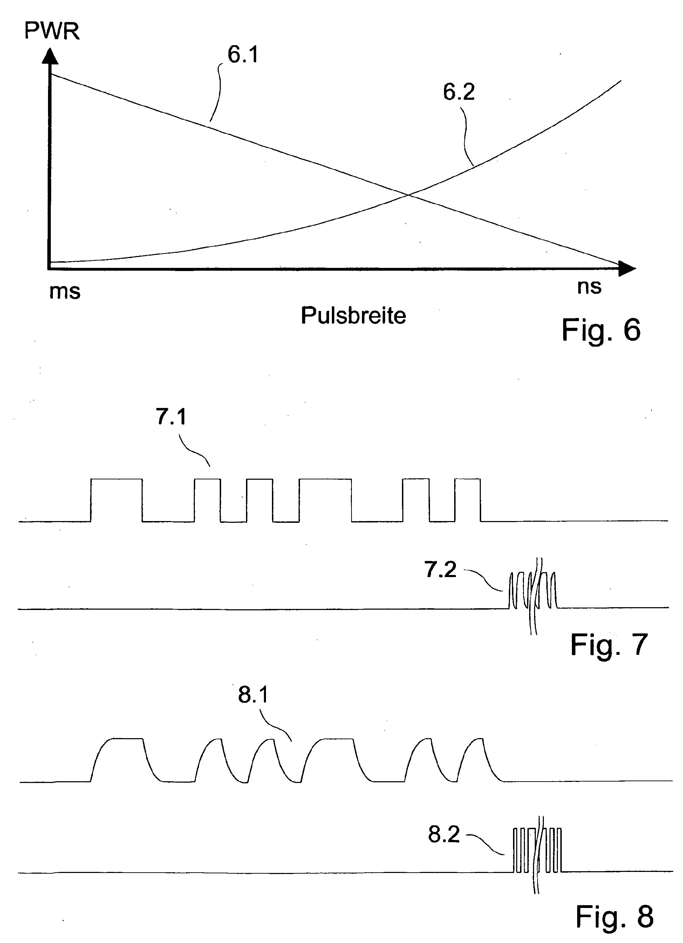

Dazu ist jedoch folgendes zu beachten: Fig. 6 zeigt schematisch den Leistungsverbrauch PWR (Power) einer Empfangs- bzw. einer Sendeeinheit bei einer Pulsbreite von einigen Millisekunden (ms) bis zu einigen Nanosekunden (ns). Die Kurve 6.1 zeigt den Leistungsverbrauch der Sendestufe. Bei "langen" Sendepulsen im Millisekundenbereich verbraucht diese Sendestufe mehr Energie als bei nur kurzer Aussendung im Nanosekundenbereich. Umgekehrt verhält es sich bei der Empfangsstufe. Deren Leistungsverbrauch in Abhängigkeit von der zu empfangenen Pulsbreite zeigt Kurve 6.2. Nach heutigem Stand der Technik verbraucht eine Empfangsstufe mehr Energie, wenn die Bandbreite erhöht wird, also bei sehr kurzen Impulsen im Nanosekundenbereich.

Der Darstellung gemäß wäre also für einen permanenten Empfang im optischen Transponder eine stromsparende Empfangstechnik zu wählen. Dies ist gegeben, wenn die ausgesendeten Impulse also relativ lang sind. Da der Sendestrom in der stationären Sicherheitseinrichtung, z.B. einer Tür, leicht bereitgestellt werden kann, wäre dieses Konzept eine Möglichkeit, den Transponder bei Türannäherung aufzuwecken, sodass er sein Datenwort abgeben kann. Eine Empfangsstufe im Transponder kann dann mit einem relativ kleinen Strom von z.B. 20 pA betrieben werden, um optische Pulse mit einer Bandbreite von z.B. 2 kHz, entsprechend einer Pulsbreite im Bereich von einigen zig Mikrosekunden, zu empfangen. Nach Auswertung dieser empfangenen optischen Signale, also dem Datenwort zur Aktivierung des Senders im Transponder, kann vom optischen Transponder wiederum ein Datenwort mit "stromsparenden" Impulsen im Nanosekundenbereich ausgesendet werden. Der "schnelle" Empfänger dafür kann mit seinem relativ hohen Stromverbrauch wiederum problemlos in der stationären Sicherheitseinrichtung, z.B. der Tür, untergebracht werden.

Diese Funktion zeigen Fig. 7 und Fig. 8.
Fig. 7 stellt die Funktion der stationären Sicherheitseinrichtung dar, Fig. 8 die Funktion des optischen Transponders. Die relativ "langen" Sendepulse 7.1 der stationären Sicherheitseinrichtung führen im Empfänger des Transponders zu einem entsprechenden Empfangssignal 8.1. Dieses enthält das Datenwort zum Aufwecken des Transponders, indem die Datenwortgenerierung / Steuerschaltung 2.5 die Sendeinheit nach Eingang eines Datensignals über die Empfangseinheit aktiviert. Die mögliche Tiefpasswirkung des Empfängers ist durch die Verrundung der Kanten im empfangenen Signal dargestellt. Andersherum verhält es sich, wenn der Transponder das Signal 8.1 empfangen hat und nun selbst wieder ein Datenwort 8.2 aussendet. Dies wird in der stationären Sicherheitseinrichtung als Signal 7.2 empfangen, was bei entsprechender Berechtigung z.B. eine Tür öffnet.

Zwei Argumente sprechen jedoch gegen diese Vorgehensweise. Erstens treten im niederfrequenten optischen Spektrum, in dem ja das Datenwort 7.1 liegt, deutliche Störungen durch Leuchtstofflampen besonders im Bereich von < 50 Hz bis über 500 kHz auf und würden daher einen ungestörten Betrieb des Transponders erschweren. Zweitens muss permanent ein Empfänger im Transponder in Betrieb sein. Dieser braucht nach Stand der Technik noch mindestens 20 pA, also einen Stromverbrauch, der für einen Betrieb mit kleiner Batterie oder Solarzelle zu hoch ist.

Weiterhin sollte in vielen Fällen der optische Transponder nicht nur sein eigenes Datenwort senden, sondern auch selbst wieder ein anderes Datenwort, das von der Sicherheitseinrichtung ausgesendet wird, empfangen und entsprechend verarbeiten, z.B. für eine Programmierfunktion. Bidirektionale bzw. programmierbare Systeme sind besonders gefragt, wenn z.B. stark erhöhte Sicherheit gegen unbefugtes Betreten gefordert wird.

Diese Anforderungen zusammen mit der Forderung eines möglichst geringen Stromverbrauchs führen zu einem etwas anderen Konzept: Um diese Leistungsmerkmale zu gewährleisten, sind besondere Maßnahmen erforderlich, wenn auf einen Batteriebetrieb verzichtet wird.

### Lösungsmöglichkeit 2:

Diese ist anhand eines Ausführungsbeispiel in Fig. 1 näher erläutert. In diesem Ausführungsbeispiel sendet der Transponder regelmäßig ein 24 Bit Datenwort mit kurzen Pulszeiten, gefolgt von einer Empfangsphase für ein 24 Bit Datenwort mit ebenso kurzen Pulszeiten aus. Der Transponder nach Fig. 1 ist in der Größe eines handelsüblichen Namensschildes ausgebildet. Die Dicke beträgt ca. 2.2 mm. Um eine immerwährende Verfügbarkeit zu gewährleisten, wird auf einen Batteriebetrieb verzichtet. Die Stromversorgung erfolgt durch eine kleine Solarzelle mit Accu. Die mögliche Fläche 1.2 für die Solarzelle beträgt im Ausführungsbeispiel z. B. nur 50 x 3 mm.

Weiterhin ist zu gewährleisten, dass der Transponder bei schlechter Raumbeleuchtung, bzw. mit einer täglichen Beleuchtungszeit von nur 3 - 4 Stunden und mäßiger Helligkeit noch eine Reserve für mindestens 24 Stunden Dauerbetrieb in völliger Dunkelheit aufbauen kann. Bei völliger Entleerung des Accus, z.B. wenn er für Tage in einem dunklen Schrank gelegen hatte, muss der Transponder auch bei geringer Beleuchtung sofort voll funktionsfähig sein. Bei Verwendung einer Photodiode mit z. B. 8 mm² Fläche (BPW 34 o.ä.) kann auf Grund der hohen Lichtleistung des Senders im Transponder auch bei der Photodiode in der stationären Sicherheitseinrichtung auf eine Optik verzichtet werden. Selbstverständlich ist es jedoch jederzeit möglich, den Sende- oder Erfassungsbereich entsprechend den Anforderungen mittels der Wahl geeigneter optischer Bauteile zum Beispiel mit integrierter oder vorgeschalteter Linsenstruktur einzuschränken bzw. die Reichweite zu erhöhen.

In der Praxis kann ein optisch programmierbarer optischer Transponder mit einem durchschnittlichen Stromverbrauch von nur 12 pA bei einer Betriebsspannung von 2 - 3 V und einer Reichweite von 6 m erstellt werden.

Erfindungsgemäß kann gemäß Fig.10 der optische Transponder 1.1 auch für den Einsatz bei bekannten, nicht optisch arbeitenden Systemen verwendet werden. Dazu wird an der Einrichtung zur Erfassung und/oder Steuerung einer Zugangsberechtigung wie z.B. an einem Kartenleser 10.2 ein Konvertierungsmodul 10.1 vorgesehen, das zur Kommunikation mit dem Identifikationselement geeignet ist. Dort werden die vom optischen Transponder 1.1 optisch übermittelten Daten in Daten gewandelt, die von einem standardmäßigen Zugangskontrollmittel lesbar sind und/oder die von einem standardmäßigem Zugangskontrollmittel ausgesendeten Daten in optisch an den optischen Transponder übermittelbare Daten gewandelt. Dadurch kann das System günstig mit bekannten Systemen gekoppelt werden. Gleichzeitig können auch weiterhin bekannte Identifikationselemente wie Magnetkarten 10.3 verwendet werden und weiterhin parallel durch das Konvertierungsmodul 10.1 hindurch erkannt werden.

Bei Update einer bestehenden RFID-Anlage trägt ein User, zum Beispiel zum Umstellen von seiner bestehenden Magnetkarte auf einen optischen Transponder, den optischen Transponder, der noch keine Zuordnung in der RFID-Anlage hat. Um das optische Transponderelement zu identifizieren, nutzt der User zum Beispiel an einer Zugangstür mit bereits bestehendem RFID-System und der Zusatzeinrichtung des optischen Transponderlesegeräts in Form des Konvertierungsmoduls 10.1 wie gewohnt seine magnetische RFID-Karte (Magnetkarte 10.3). Die Zusatzeinrichtung des optischen Transponderlesegeräts liest die ID-Nummer des optischen Transponder-Namensschilds 1.1 und legt diese ID-Nummer zusammen mit der vom magnetischen RFID-System gelesenen ID-Nummer in einer Liste ab. Bei einem zweiten Durchschreiten der Tür wird die ID-Nummer des optischen Transponders gelesen und aus der entsprechenden Liste wird die zugehörige RFID-Nummer ausgegeben und dem RFID-Kartenleser 10.2 übermittelt. Dies kann mit Hilfe von magnetischer Induktion oder unter Nutzung der Schnittstelle zwischen RFID-Kartenleser und der zentralen Steuereinheit geschehen. Mit diesem Vorgang werden ein aufwendiges Anpassen der bestehenden systemspezifischen Infrastruktur sowie eine Programmierung des optischen Transponders vermieden.

**Bezugszeichenliste**

| | | | |
|---|---|---|---|
| 1.1 | optischer Transponder in Form eines Namensschildes | 5.3 | Datenwort |
| | | 5.4 | Zeitraum Aktivierung Empfangs-einheit |
| 1.2 | Raum für Solarzelle | | |
| 1.3 | optisches Sendeelement, z.B. LED | 5.5 | empfangenes Signal im Transpon-der |
| 1.4 | Photodiode | | |
| 1.5 | Namensschild Seitenansicht | 6.1 | Kurve für Leistungsverbrauch Sendestufe |
| 2.1 | Solarzelle, bestehend aus 8 Photodioden | | |
| | | 6.2 | Kurve für Leistungsverbrauch Empfangsstufe |
| 2.2 | Ladeschaltung mit Vorzugsberechtigung | | |
| | | 7.1 | lange Sendepulse der stationären Sicherheitseinrichtung |
| 2.3 | Accu | | |
| 2.4 | Taktgenerator | 7.2 | Empfangssignal der stationären Sicherheitseinrichtung |
| 2.5 | Datenwortgenerierung / Steuerschaltung | | |
| | | 8.1 | Empfangssignal des Transponders |
| 2.6 | Empfangene Daten | 8.2 | vom Transponder ausgesandtes Datenwort |
| 2.7 | LED-Treiberstufe | | |
| 2.8 | geschaltete Stromversorgung | 9.1 | Photodiode der stationären Sicher-heitseinrichtung |
| 2.9 | Aktivierung für Datenwort | | |
| 2.11 | Datenwort | 9.2 | Empfangselektronik der stationä-ren Sicherheitseinrichtung |
| 2.12 | Spannungsversorgung für den Taktgenerator | | |
| | | 9.3 | Datenverarbeitung |
| 2.13 | Aktivierung für Empfangseinheit | 9.4 | Sendestufe der stationären Einheit |
| 2.14 | Transponder-Empfangseinheit | 9.5 | aussendendes Element, LED |
| 3.2 | Spannungsverlauf an der Solarzelle ohne Belastung | 9.7 | Datenkommunikation mit Zentralrechner |
| 3.5 | Aktivierungspunkt für Ladestrom | 9.9 | Datenkommunikation mit Steuerelektrik |
| 3.4 | Ladestrom für den Accu | | |
| 4.1 | empfangenes Signal | 10.1 | Konvertierungsmodul |
| 4.2 | Zeitabschnitt für Sendephase | 10.2 | Kartenleser |
| 4.3 | gesendetes Datenwort | 10.3 | Magnetkarte |
| 5.1 | Zeitabschnitt zur Erzeugung des Datenwortes | | |

## Patentansprüche

1. Verfahren zum Erkennen eines mit einem optischen Transponder (1.1) versehenen Identifikationselements mit dem Schritten:
- Erkennen des optischen Transponders (1.1),
- Erkennen einer RFID-Nummer eines magnetischen Transponders (10.3), **gekennzeichnet durch** die Schritte,
- falls der optische Transponder ohne Zuordnung ist, Erkennen der RFID-Nummer des magnetischen Transponders (10.3) und Zuordnen der RFID-Nummer des magnetischen Transponders (10.3) zur ID-Nummer des optischen Transponders (1.1),
- falls eine Zuordnung des optischen Transponders (1.1) besteht, Ausgeben der der optischen ID-Nummer zugeordneten, systemspezifischen RFID-Nummer des vorhandenen magnetischen Transponders (10.3) und
- Identifizieren des Identifikationselements.

2. Verfahren nach Anspruch1, **dadurch gekennzeichnet, dass** der optische Transponder mit einer autarken Energieversorgung im Identifikationselement betrieben wird, die keine Batterie ist.

3. Verfahren nach Anspruch 1 oder 2, **dadurch gekennzeichnet, dass** Daten des optischen Transponders (1.1) durch eine bidirektionale Kommunikation mit einer Einrichtung zur Erfassung und/oder Steuerung einer Zugangsberechtigung beeinflussbar sind.

## Claims

1. Method for recognizing an identification element provided with an optical transponder (1.1) comprising the steps:
- recognizing the optical transponder (1.1),
- recognizing a RFID number of a magnetic transponder (10.3),
**characterized by** the steps,
- in the event that the optical transponder is unallocated, recognizing the RFID number of the magnetic transponder (10.3) and associating the RFID number of the magnetic transponder (10.3) with the ID number of the optical transponder (1.1),
- in the event that the optical transponder (1.1) has been allocated, outputting the system-specific RFID number of the existing magnetic transponder (10.3) that is associated with the optical ID number and
- identifying the identification element.

2. Method according to claim 1, **characterized in that** the optical transponder is operated by an autonomous power supply in the identification element that is no battery.

3. Method according to claim 1 or 2, , **characterized in that** data of the optical transponder (1.1) can be influenced by a device for detecting and/or controlling access authorisation by means of a bidirectional communication.

## Revendications

1. Procédé pour la reconnaissance d'un élément d'identification pourvu d'un transpondeur optique (1.1), comportant les étapes suivantes :
- reconnaissance du transpondeur optique (1.1),
- reconnaissance d'un numéro RFID d'un transpondeur magnétique (10.3),
**caractérisé par** les étapes suivantes :
- dans le cas où le transpondeur optique est sans attribution, reconnaissance du numéro RFID du transpondeur magnétique (10.3) et attribution du numéro RFID du transpondeur magnétique (10.3) au numéro d'identification du transpondeur optique (1.1),
- dans le cas où il y a une attribution du transpondeur optique (1.1), émission du numéro RFID du transpondeur magnétique existant (10.3) spécifique au système et associé au numéro d'identification optique et
- identification de l'élément d'identification.

2. Procédé selon la revendication 1, **caractérisé en ce que** le transpondeur optique est alimenté à l'intérieur de l'élément d'identification par une alimentation en énergie autonome qui n'est pas une batterie.

3. Procédé selon la revendication 1 ou 2, **caractérisé en ce que** les données du transpondeur optique (1.1) peuvent être influencées par une communication bidirectionnelle avec un dispositif pour la saisie et/ou la commande d'une autorisation d'accès.
